# EUROPEAN PATENT APPLICATION

(11) **EP 4 701 280 A1**
(43) Date of publication of application: **25.02.2026**
(21) Application number: 24807578.0
(22) Date of filing: 16.05.2024
(51) Int. Cl.: H04W 52/02, H04L 41/0894, H04L 41/0833, H04W 88/14

(54) **METHOD AND APPARATUS FOR PROVIDING ENERGY ALLOWANCE INFORMATION IN WIRELESS COMMUNICATION SYSTEM**

(30) Priority: 18.05.2023 KR 20230064595
(71) Applicant: Samsung Electronics Co., Ltd., Suwon-si, Gyeonggi-do 16677 (KR)
(72) Inventor: SUH, Dongeun, Suwon-si Gyeonggi-do 16677 (KR); PARK, Jungshin, Suwon-si Gyeonggi-do 16677 (KR)
(74) Representative: Gulde & Partner
(86) International application number: PCT/KR2024/006667
(87) International publication number: WO 2024/237707

(57) **Abstract**

The present disclosure relates to a 5G or 6G communication system for supporting higher data transmission rates. A method performed by a network exposure function (NEF) entity in a mobile communication system comprises the steps of: receiving, from an application function (AF) entity, a message for requesting negotiation for at least one policy associated with energy, the message including information about maximum allowed energy consumption of a radio access network (RAN) or a user plane function (UPF) entity; transmitting a first message including the information about the maximum allowed energy consumption to a policy control function (PCF) entity; and receiving, from the PCF entity, a second message including information about the at least one policy associated with the energy as a response to the first message, wherein the at least one policy associated with the energy can be based on the information about the maximum allowed energy consumption.

## Description

### [Technical Field]

The disclosure relates to a wireless communication system, and more specifically, to a method and an apparatus for providing energy allowance information in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information on positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

Provided according to an embodiment of the disclosure are an apparatus and a method capable of effectively providing services in a mobile communication system.

### [Solution to Problem]

According to an embodiment, a method performed by a network exposure function (NEF) entity in a mobile communication system may include an operation of receiving, from an application function (AF) entity, a message for requesting negotiation for at least one policy associated with energy, the message including information about maximum allowed energy consumption of a radio access network (RAN) or a user plane function (UPF) entity, an operation of transmitting a first message including the information about the maximum allowed energy consumption to a policy control function (PCF) entity, and an operation of receiving, from the PCF entity, a second message including information about the at least one policy associated with the energy as a response to the first message, wherein the at least one policy associated with the energy may be based on the information about the maximum allowed energy consumption.

### [Advantageous Effects of Invention]

According to an embodiment of the disclosure, an apparatus and a method capable of effectively providing services in a wireless communication system can be provided.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

FIG. 1 illustrates a 5G system architecture according to an embodiment of the disclosure.
FIG. 2 illustrates a method in which an AF and a 5G core network negotiate an energy budget according to an embodiment.
FIG. 3 illustrates a method in which an AF applies an energy policy negotiated with a 5G core network.
FIG. 4 illustrates an example of a functional structure of a base station according to an embodiment of the disclosure.
FIG. 5 illustrates an example of a functional structure of a UE according to an embodiment of the disclosure.
FIG. 6 illustrates an example of a functional structure of a core network entity according to an embodiment of the disclosure.

### [Mode for the Invention]

Hereinafter, the operation principle of the disclosure will be described in detail in conjunction with the accompanying drawings. The terms which will be described below are terms defined in consideration of the functions in the disclosure. The terms in the disclosure may be different according to users, intentions of the users, or customs, and therefore, the definitions of the terms should be made based on the contents throughout the specification.

In the disclosure, terms referring to network entities or network functions, terms referring to messages, terms referring to identification information, and the like are illustratively used for the sake of descriptive convenience. Therefore, the disclosure is not limited by the terms as described below, and other terms referring to subjects having equivalent technical meanings may also be used.

In the following description of the disclosure, terms and names defined in the 5G system standards will be used for the sake of convenience, but the disclosure is not limited by these terms and names and may be applied in the same way to systems that conform other standards.

Hereinafter, the operation principle of the disclosure will be described in detail with reference to the accompanying drawings.

In describing the embodiments of the disclosure, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The embodiments of the disclosure are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description of the disclosure, terms and names defined in the 3rd generation partnership project long term evolution (3GPP LTE) and 3GPP 5G standards will be used for the sake of descriptive convenience. However, the disclosure is not limited by these terms and names, and may be applied in the same way to systems that conform other standards.

Hereinafter, exemplary embodiments of the disclosure will be described in detail with reference to the accompanying drawings. It should be noted that, in the accompanying drawings, the same or like elements are designated by the same or like reference signs as much as possible. Also, it should be noted that the following accompanying drawings of the disclosure are provided to help an understanding of the disclosure and the disclosure is not limited to configurations or arrangements illustrated in the drawings of the disclosure.

The disclosure proposes a method in which an application service provider provides energy consumption consumed in traffic transmission/reception to a 5G network.

The disclosure proposes a method in which an application service provider provides energy consumption consumed in traffic transmission/reception to a 5G network. Specifically, a method for storing energy consumption provided by an application service provider in a form acceptable by a network is proposed.

Through the disclosure, maximum energy consumption used when transmitting/receiving data regarding an application service provider may be limited. In addition, an amount of energy allowed for data transmission/reception for specific traffic may be stored through the disclosure.

The disclosure proposes a method and an apparatus for providing energy allowance information in a wireless communication system.

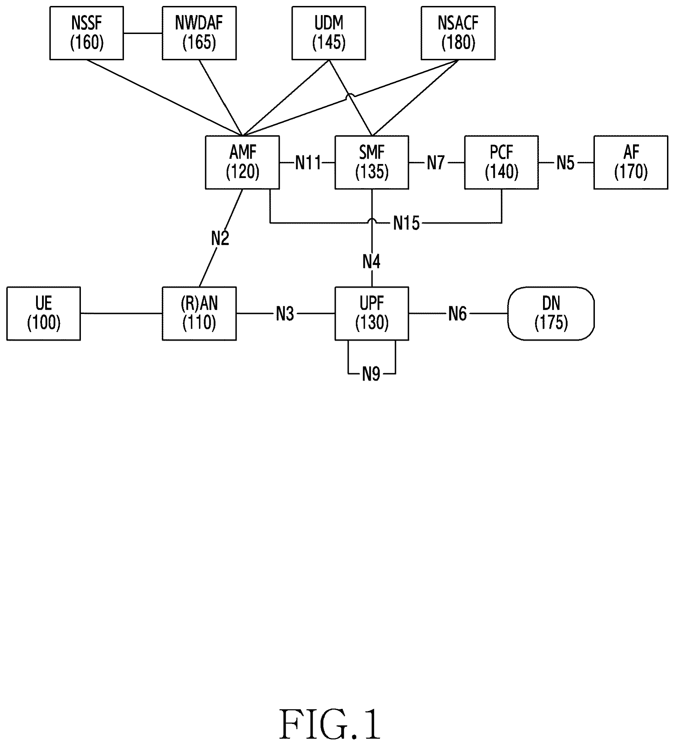

FIG. 1 illustrates a 5G system architecture according to an embodiment of the disclosure.

Referring to FIG. 1, a mobile communication network (e.g., 5G mobile communication network) according to an embodiment may include a 5G user equipment (UE) (terminal), a 5G radio access network (RAN, a base station, a next-generation NodeB (gNB), an evolved Node B (eNB), etc.), and a 5G core network. For example, the 5G core network may include network functions (NFs), such as an access and mobility management function (AMF) 120 that provides a mobility management function of a UE, a session management function (SMF) 135 that provides a session management function, a user plane function (UPF) 130 that serves to transfer data, a policy control function (PCF) 140 that provides a policy control function, a unified data management (UDM) 145 that provides a function of managing data, such as subscriber data and policy control data, and a unified data repository (UDR) that stores data of various NFs such as the UDM.

The network architecture of the 5G system according to an embodiment may include various network entities. For example, the 5G system may include an authentication server function (AUSF) (not illustrated), a (core) access and mobility management function (AMF) 120, a session management function (SMF) 135, a policy control function (PCF) 140, an application function (AF) 170, a unified data management (UDM) 145, a data network (DN) 175, a network exposure function (NEF) (not illustrated), a network slicing selection function (NSSF) 160, an edge application service domain repository (EDR) (not illustrated), an edge application server (EAS) (not illustrated), an EAS discovery function (EASDF) (not illustrated), a network data analytics function (NWDAF) (not illustrated) a user plane function (UPF) 130, a (radio) access network (R)AN) 110, and a terminal, i.e., user equipment (UE) 100.

According to an embodiment, the respective NFs in the 5G system may support the following functions.

According to an embodiment of the disclosure, the AUSF may process and store data for authentication of the UE 100.

According to an embodiment, the AMF 120 may provide a function for access and mobility management on a per-UE basis, and by default, one UE may be connected to one AMF. Specifically, the AMF 120 may support functions such as signaling between CN nodes for mobility between 3GPP access networks, radio access network (RAN) CP interface (i.e., N2 interface) termination, non-access stratum (NAS) signaling termination (N1), NAS signaling security (NAS ciphering and integrity protection), AS security control, registration management (registration area management), connection management, idle mode UE reachability (including control and execution of paging retransmission), mobility management control (subscription and policy), intra-system mobility and inter-system mobility support, support for network slicing, SMF selection, lawful intercept (LI) (for an AMF event and an interface to an LI system), delivery of session management (SM) message between the UE and the SMF, a transparent proxy for routing a session management (SM) message, access authentication, access authorization including roaming permission checking, delivery of an SMS message between the UE and a short message service function (SMSF), a security anchor function (SAF), and/or security context management (SCM). Some or all of the functions of the AMF 120 may be supported within a single instance of one AMF.

According to an embodiment, the DN 175 may refer to, for example, an operator service, internet access, or third-party service. The DN 175 may transmit a downlink protocol data unit (PDU) to the UPF 130, or may receive, from the UPF 130, a PDU transmitted from the UE 100.

According to an embodiment, the PCF 140 may receive information about packet flows from an application server and provide functionality for determining policies such as mobility management and session management. For example, the PCF 140 may support functions, such as supporting a unified policy framework for controlling network operations, providing policy rules so that control plane function(s) (e.g., AMF, SMF, etc.) can enforce the policy rules, and implementing a front end for accessing relevant subscription information for policy decisions in a user data repository (UDR).

According to an embodiment, the SMF 135 may provide a session management function. In case that the UE 100 has a plurality of sessions, each session may be managed by a different SMF 135. For example, the SMF 135 may support functions such as session management (e.g., establishment, modification, and release of a session, including maintenance of a tunnel between the UPF 130 and the (R)AN 110 node), assignment and management of UE IP addresses (optionally including authentication), selection and control of a user plane (UP) function, configuration of traffic steering to route traffic from the UPF 130 to appropriate destinations, and termination of interfaces toward policy control functions, enforcement of control parts of policy and quality of service (QoS), lawful intercept (LI) (for an SM event and an interface to an LI system), termination of SM parts of NAS messages, downlink data notification, delivery of access network (AN)-specific SM information to (R)AN 110 through N2 via an initiator (AMF 120), determination of a session and service continuity (SSC) mode, and a roaming function. Some or all of the functions of the SMF 135 may be supported within a single instance of one SMF.

According to an embodiment, the UDM 145 may store user subscription data, policy data, etc. The UDM 145 may include two parts, that is, an application front end (FE) (not illustrated) and a user data repository (UDR) (not illustrated).

According to an embodiment, the FE may include a UDM FE responsible for location management, subscription management, credential processing, and the like, and a PCF responsible for policy control. The UDR may store data required for the functions provided by the UDM-FE and policy profiles required by the PCF. Data stored in the UDR may include policy data and user subscription data including subscription identifiers, security credentials, subscription data related to access and mobility, and session-related subscription data. The UDM-FE may support functions such as accessing subscription information stored in the UDR, authentication credential processing, user identification handling, access authentication, registration/mobility management, subscription management, and/or SMS management.

According to an embodiment, the UPF 130 may deliver a downlink PDU, received from the DN 130, to the UE 101 via the (R)AN 110. The UPF 130 d may deliver an uplink PDU, received from the UE 100, to the DN 175 via the (R)AN 110. For example, the UPF 130 may support functions, such as an anchor point for intra- and inter-RAT mobility, an external PDU session point for interconnection to a data network, packet routing and forwarding, a user plane part of packet inspection and policy rule enforcement, lawful intercept, and traffic usage reporting, uplink classifier for supporting the routing of traffic flows to the data network, branching points for supporting multi-homed PDU sessions, QoS handling for a user plane (e.g., packet filtering, gating, uplink/downlink rate enforcement), uplink traffic verification (SDF mapping between service data flow (SDF) and QoS flow), transport-level packet marking within uplink and downlink, downlink packet buffering, and downlink data notification triggering. Some or all of the functions of the UPF 130 may be supported within a single instance of one UPF.

According to an embodiment, the AF 170 may interwork with a 3GPP core network to provide services. For example, the AF 170 may interwork with a 3GPP core network to support functions, such as application influence on traffic routing, access to network capability exposure, and interworking with a policy framework for policy control

According to an embodiment, the (R)AN 110 collectively refers to new radio access networks supporting both evolved UTRA (E-UTRA), which is an evolved version of 4G radio access technology, and new radio (NR) access technology (e.g., gNB).

According to an embodiment, the gNB may support functions for radio resource management. For example, the gNB may support functions, such as radio bearer control, radio admission control, connection mobility control, dynamic allocation of resources (i.e., scheduling) to a UE in uplink/downlink, Internet protocol (IP) header compression, user data stream encryption, and/or integrity protection. For example, the gNB may support functions, such as selection of the AMF during UE attachment if routing to the AMF is not determined from information provided to the UE, routing of user plane data to UPF(s), routing of control plane information to the AMF, connection setup and release, scheduling and transmission of paging messages (originating from the AMF), scheduling and transmission of system broadcast information (originating from the AMF or operating and maintenance (O&M), measurement and measurement reporting configuration for mobility and scheduling, transport level packet marking in the uplink, session management, support for network slicing, QoS flow management and mapping to data radio bearers, support for UEs in inactive mode, NAS message distribution function, NAS node selection function, radio access network sharing, dual connectivity, and tight interworking between NR and E-UTRA.

According to an embodiment, the UE 100 may refer to a user equipment. The user equipment may be referred to as such terms as "terminal", "mobile equipment (ME)", or "mobile station (MS)". In addition, the user equipment may be a portable device, such as a laptop, a mobile phone, a personal digital assistant (PDA), a smartphone, or a multimedia device, or may be a non-portable device, such as a personal computer (PC) or a vehicle-mounted device.

According to an embodiment, the NEF may provide a means for securely exposing services and capabilities provided by 3GPP network functions, such as those for third parties, internal exposure/re-exposure, application functions, and edge computing. The NEF 111 may receive information (based on exposed capability(s) of other NF(s)) from other NF(s). The NEF may store the received information as structured data by using a standardized interface to a data storage network function. The stored information may be re-exposed by the NEF to other NF(s) and AF(s) and used for other purposes such as analysis.

According to an embodiment, the NRF may support a service discovery function. The NRF may receive an NF discovery request from an NF instance, and provide information about a discovered NF instance to the NF instance. In addition, the NRF may maintain available NF instances and services supported by the NF instances.

Although FIG. 1 illustrates a reference model for a case where the UE 100 accesses one DN 175 by using one PDU session for the sake of descriptive convenience, the disclosure is not limited thereto.

According to an embodiment, the UE 100 may use multiple PDU sessions to access, for example, two (i.e., local and central) data networks simultaneously. In this case, two SMFs may be selected for different PDU sessions. However, each SMF may have the capability to control both a local UPF and a central UPF within a PDU session.

According to an embodiment, the UE 100 may simultaneously access, for example, two (i.e., local and central) data networks provided within a single PDU session.

According to an embodiment, the NSSF 160 may select a set of network slice instances for serving the UE 101. In addition, the NSSF 160 may determine a granted network slice selection assistance information (NSSAI) and, if necessary, perform a mapping to a subscribed single-network slice selection assistance information (S-NSSAI). Furthermore, the NSSF 160 may determine a configured NSSAI and, if necessary, perform mapping to subscribed S-NSSAIs. Moreover, the NSSF 160 may determine a set of AMFs to be used to serve the UE or, depending on the configuration, may query the NRF to determine a list of candidate AMFs.

According to an embodiment, the NRF may support a service discovery function. The NRF may receive an NF discovery request from an NF instance and provide information about a discovered NF instance to the NF instance. In addition, the NRF may maintain available NF instances and services supported by the NF instances.

In 3GPP systems, conceptual links connecting NFs in the 5G system may be defined as "reference points". In the following, examples of reference points included in the 5G system architecture described in FIG. 1 are provided below.
- N1: A reference point between a UE and an AMF
- N2: A reference point between an (R)AN and an AMF
- N3: A reference point between an (R)AN and a UPF
- N4: A reference point between an SMF and a UPF
- N5: A reference point between a PCF and an AF
- N6: A reference point between a UPF and a DN
- N7: A reference point between an SMF and a PCF
- N8: A reference point between a UDM and an AMF
- N9: A reference point between two core UPFs
- N10: A reference point between a UDM and an SMF
- N11: A reference point between an AMF and an SMF
- N12: A reference point between an AMF and an AUSF
- N13: A reference point between a UDM and an authentication server function (AUSF)
- N14: A reference point between two AMFs
- N15: A reference point between a PCF and an AMF for a non-roaming scenario, and a reference point between a PCF and an AMF in a visited network for a roaming scenario

According to an embodiment, in the 5G system, network slicing may refer to a structure and a technology enabling multiple independent logical networks virtualized in a single physical network. In order to satisfy specialized requirements of a service/application, a network operator provides a service by configuring a virtual end-to-end network referred to as a network slice.

In this case, the network slice may be distinguished by an identifier referred to as single-network slice selection assistance information (S-NSSAI). The network may transmit a set of allowed slices (e.g., allowed NSSAI(s)) to a UE during a UE registration procedure, and the UE may transmit and/or receive application data via a protocol data unit (PDU) session generated via one piece of S-NSSAI (i.e., network slice) in the set of allowed slices.

According to an embodiment, the mobile communication system may receive, from an external third party server (application function, AF), identifier information and quality of service (QoS) requirements of UEs capable of participating in federated learning. The mobile communication system may select UEs for which network resource allocation is possible, based on the requirements, and perform allocation of the network resources (that is, QoS flows), and may transmit a result of the resource allocation to the AF. In the description of the disclosure, the term "aggregated QoS" may be used and interpreted to have the same meaning as "same QoS", "identical QoS", and "group QoS". For example, an aggregated QoS request indicator and a same QoS request indicator, aggregated QoS information and same QoS information, and an aggregated QoS notification indicator and a same QoS notification indicator may be interpreted and used as having the same meaning, respectively.

In the disclosure, the energy budget control (EBC) NF(s) may be positioned in one of the following NFs: a PCF, an NWDAF, and an OAM entity.

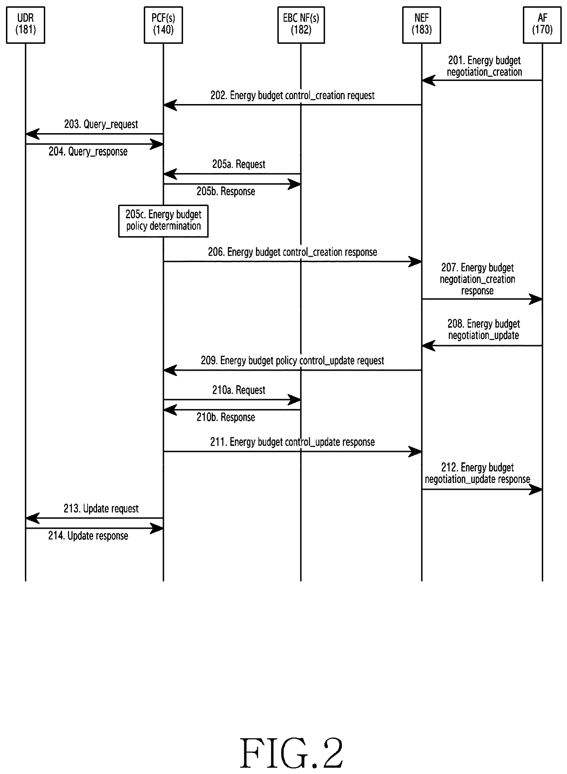

FIG. 2 illustrates a method in which an AF and a 5G core network negotiate an energy budget according to an embodiment.

Referring to FIG. 2, in operation 201 according to an embodiment, an application function (AF) 170 may transmit a message to a NEF for energy negotiation.

### (Nnef_EBNegotiation_Create)

For example, the message transmitted to NEF (or a message for energy negotiation) may include at least some of the following information:
◆ Energy budget information:
   ■ When information of application traffic subject to energy control is included, the energy budget information may include at least some of the following information:
      - The total energy consumption (e.g., a maximum value) allowed for the UE to transmit and receive traffic for the application may be included (i.e., UE energy budget for application). (e.g., information about the total energy consumption of the UE)
      - The total energy consumption allowed for the RAN to transmit and receive traffic for the application may be included (i.e., RAN energy budget for application). (e.g., information about the total energy consumption of the RAN)
      - The total energy consumption allowed for the UPF to transmit and receive traffic for the application may be included (i.e., UPF energy budget for application). (e.g., information about the total energy consumption of the UPF)
      - The total energy consumption allowed for the RAN and the UPF to transmit and receive traffic for the application may be included (i.e., network energy budget for application). (e.g., information about the total energy consumption of the RAN and the UPF)
      - The total energy consumption allowed for the UE, the RAN, and the UPF to transmit and receive traffic for the corresponding application may be included (i.e., total energy budget for application). (e.g., information about the total energy consumption of the UE, the RAN, and the UPF)
   ■ When information of application traffic subject to energy control is not included, the energy budget information may include at least some of the following information:
      - The total energy consumption (e.g., a maximum value) allowed for the UE to transmit and receive traffic may be included (i.e., UE energy budget). (e.g., information about the total energy consumption of the UE)
      - The total energy consumption (e.g., a maximum value) allowed for the RAN to transmit and receive traffic may be included (i.e., RAN energy budget). (e.g., information about the total energy consumption of the RAN)
      - The total energy consumption allowed for the RAN and the UPF to transmit and receive traffic may be included (i.e., user plane energy budget). (e.g., information about the total energy consumption of the RAN and the UPF)
◆ The total energy consumption allowed to be used when the UPF transmits/receives traffic for the corresponding application may be included (i.e., UPF energy budget information).
◆ Information about UEs subject to energy control or UEs subject to energy control:
   For example, the information about UEs may be referenced as information indicating UEs to which an energy budget is to be applied. For example, the information about UEs may include one or more of a group ID, a list of UE ID(s), or an AF ID.
◆ Information about an application subject to energy control or information on application subject to energy control(information of Application traffic subject to energy control):
   For example, the information about an application may be referenced as information indicating traffic to which an energy budget is to be applied. For example, the information about an application may include an application service provider (ASP) ID, an application ID, a server medium access control (MAC) address, and/or IP 3 tuples (i.e., a server IP address, a port number, and protocol information).
◆ Time information:
   For example, the time information may include information on the time to which the energy budget is applicable. For example, an indicator indicating whether to apply same periodically may be included along with the time information. As another example, information in the form of a period (e.g., from 10/March/2023 to 28/March/2023) may be included.
◆ Area information: Information on an area to which the energy budget is applicable may be included. The area information may include a tracking area identity (TAI)(s), a cell ID(s), and/or geographical location information.
◆ Information for a notification request or a request for a notification: may be included in case that the energy budget is entirely or almost exhausted, and the AF wants to receive a notification therefor.

According to an embodiment, the message for energy negotiation may include energy budget information, UPF energy budget information, information on UEs subject to energy control, information on an application subject to energy control, time information, area information, and/or information for a notification request.

According to an embodiment, the message for energy negotiation may include different information depending on whether an application subject to energy control is included. For example, in case that the message for energy negotiation includes an application subject to energy control, the message for energy negotiation may include information about total energy consumption of the UE, information about total energy consumption of the RAN, information about total energy consumption of the UPF, information about total energy consumption of the RAN and the UPF, and/or information about total energy consumption of the UE, the RAN, and the UPF.

As another example, in case that the message for energy negotiation does not include an application subject to energy control, the message for energy negotiation may include information about total energy consumption of the UE, information about total energy consumption of the RAN, and information about total energy consumption of the RAN and the UPF.

The message transmitted in operation 201 in the disclosure has been described as a message for energy negotiation, but this is only an example and may be replaced by various terms. For example, the message transmitted in operation 201 may be replaced with a message for energy adjustment, a message for energy reduction, a message for energy control, or a message for energy determination.

According to an embodiment, the NEF 183 may perform authentication with respect to a request (or message) of the AF 170 received in operation 201. In addition, the NEF 183 may include the information (e.g., energy budget information, information of application traffic subject to energy control, and a request for notification) included in the message received in operation 201 in the message transmitted to the PCF 140. For example, the NEF 183 may transmit, to the PCF 140, at least a part of the information included in the message for energy negotiation received from the AF 170. (Npcf_EBPolicyControl_Create request)

According to an embodiment, in case that the PCF 140 has received the authorization request message associated with the energy budget policy generation in operation 202, or in case that the energy budget is included in the received message, the PCF 140, in operation 203, may transmit a message including energy budget data and/or policy data to the UDR 181.

### (Nudr_DM_Query request)

According to an embodiment, in case that energy budget data and/or policy data is included in the message received in operation 203, the UDR 181, in operation 204, may provide or transmit all information (i.e., energy budget policy information for all application service providers (ASPs)) regarding the energy budget data and the policy data to the PCF 140.

### (Nudr_DM_Query_response)

According to an embodiment, in case that at least one of of a network energy budget, a total energy budget, a network energy budget for an application, and a total energy budget for an application is included in the energy budget information received in operation 202, in operation 205a, the PCF 140 may transmit, to the EBC NF(s) 182, together with the energy budget information, information of application traffic subject to energy control. UEs subject to energy control, and/or area information, etc., which is received in operation 202.

According to an embodiment, the PCF 140 may include at least one of an energy profile mapping request indicator or an energy budget information conversion request indicator in the message to be transmitted to the EBC NF 182.

According to an embodiment, the EBC NF 182, in operation 205b, may convert the energy budget information included in the message received from the PCF 140 in operation 205a, into a smaller entity unit. For example, the EBC NF 182 may convert or change energy budget information to an energy budget for the UPF, an energy budget for the UE, and/or an energy budget for the RAN. In this case, the EBC NF 182 may utilize at least a portion of other information included in the message received in operation 205a. That is, the EBC NF 182 may convert the energy budget information into energy budget information of a smaller entity unit, based on at least a portion of the information included in the received message.

According to an embodiment, the conversion may be performed when an energy budget information conversion request indicator is included in the information received in operation 205a, or may be performed by a determination of the EBC NF 182 even when the indicator is not included. That is, the conversion of the EBC NF 182 may be triggered by the energy budget information conversion request indicator or triggered based on a determination of the EBC NF 182 when a preconfigured condition is satisfied.

For example, in case that a network energy budget (or a network energy budget for an application) is included in the information received in operation 205a, the EBC NF 182 convert the network energy budget into a RAN energy budget (or a RAN energy budget for an application) and/or a UPF energy budget (or a UPF energy budget for an application).

For example, in case that a total energy budget (for application) is included in the information received in operation 205a, the EBC NF 182 may convert the total energy budget into a UE energy budget (or a UE energy budget for an application), a RAN energy budget (or a RAN energy budget for an application), and/or a UPF energy budget (or a UPF energy budget for an application).

According to an embodiment, for the conversion, the EBC NF 182 may use statistical information indicating energy consumed during a specified time when the UE 100 transmits and receives traffic (or, the UE 100 transmits and receives traffic for an application), statistical information indicating energy consumed during a specified time when the RAN 110 transmits and receives traffic (or the RAN transmits and receives traffic for an application), and/or statistical information indicating energy consumed during a specified time when the UPF (or, the UPF transmits and receives traffic for an application). That is, the EBC NF 182 may perform the conversion, based on statistical information of the UE, statistical information of the RAN, and/or statistical information of the UPF.

According to an embodiment, the EBC NF 182 may calculate or identify several energy budgets allowed in the network according to configuration for each entity, with respect to information (or, information in a converted form of the information) included in the energy budget information received in operation 205a. For example, the EBC NF 182 may calculate or identify several UPF energy budget(s) for the UPF energy budget.

According to an embodiment, the EBC NF 182 may map an energy budget that is allowable for each entity to an energy profile(s). In this case, the EBC NF 182 may utilize at least a portion of other information included in the message received in operation 205a. The operation of matching the energy budget to an energy profile may be performed in case that an energy profile mapping request indicator is included in the information received in operation 205a, or may be performed by a determination of the EBC NF 182 even if the energy profile mapping indicator is not included in the received information.

According to an embodiment, a set of energy profiles may represent a set of range(s) of energy consumption used when an entity (e.g., UE 100, RAN 110, UPF 130, the network (that is, the RAN 110 and the UPF 130), or the entirety (that is, may be one of the UE 100, the RAN 110, and the UPF 130)) transmits and/or receives traffic. Each energy profile may be expressed by minimum energy consumption and/or maximum energy consumption. For example, the unit of energy consumption may be a joule (or watt).

According to an embodiment, at least one entity may be configured as one of energy profiles included in the set of energy profiles. In case that the energy profile is configured, at least one entity may adjust the energy consumption, based on the configured energy profile. For example, there may also exist an energy profile indicating that the device power for transmitting and/or receiving traffic is turned off.

For example, energy profile 1 may be expressed as 0.5 to 1.0 kilojoules (or kilowatts), and the energy profile 2 may be expressed as 1.0 to 1.5 kilojoules (or kilowatts). For example, an entity (e.g., the UPF) configured with energy profile 1 may adjust the energy consumption to 0.5 to 1.0 kilo Joule (or kilo Watt) when transmitting and/or receiving traffic.

According to an embodiment, when deriving a UPF energy profile for the UPF energy budget, the EBC NF 182 may, for example, include an energy profile indicating a range including the energy consumption included in the UPF energy budget together with energy profiles close to the energy profile, in the corresponding UPF energy profile(s). That is, when determining the UPF energy profile, the EBC NF 182 may determine the UPF energy profiles, based on a first energy profile corresponding to the energy consumption included in the UPF energy budget and at least one additional energy profile similar to the first energy profile in terms of energy consumption.

According to an embodiment, each of a core network entity, a base station (e.g., a gNB, an eNB), and/or the UE 100 included in the network (e.g., a 5G network) may correspond to at least one energy profile.

According to an embodiment, the set of energy profiles may be independently stored in the EBC NF 182 for each of the UE 100, the RAN 110, the UPF 130, the network (that is, the RAN 110 and the UPF 130), and the entirety (that is, the UE 100, the RAN 110, and the UPF 130).

According to an embodiment, an energy profile for a specific entity may be configured for all traffic transmitted by the entity or for specific traffic (e.g., traffic for a specific application). For example, the energy profile for the UE 100 may be configured for all traffic transmitted by the UE 100, and the energy profile for the UE 100 may be configured for designated types of traffic (e.g., corresponding to a specific application) among various types of traffic transmitted by the UE 100. That is, the energy profile may be configured for each type of traffic transmitted by a specified entity, and may also be configured for the entire traffic.

However, the two methods for configuring the energy profile are not exclusive. For example, the energy profile configured for the UE 100 may be configured for the total traffic transmitted by the UE 100, and may also be configured for specified traffic corresponding to a specific application among traffic transmitted by the UE 100.

According to an embodiment, the EBC NF 182 may obtain a set of energy profiles for each entity through the OAM (not shown) or the NWDAF (not shown) before receiving the message of operation 205a, and may store the obtained set of energy profiles.

In the disclosure, at least one profile, the profile set, and a plurality of profiles may be replaced with various terms for referring to configuration information for energy control. For example, the at least one profile may be replaced by various terms such as entity-specific configuration information, entity-specific energy mapping information, and entity-specific energy information.

According to an embodiment, the EBC NF 182 may transmit a response message to the PCF 140. The response message transmitted by the EBC NF 182 to the PCF 140 may include at least some of the following pieces of information:
- Candidate energy budget(s): A set of energy budgets allowed for each of one or more entities may be included. (e.g., candidate energy budget information)
- Energy profile(s): Energy profile(s) allowed for each of one or more entities may be included. (e.g., energy profile information)

Result: A processing result (e.g., success or failure) with respect to energy budget conversion and/or energy profile mapping may be included. For example, when the result information indicates a failure, the result information may include information indicating a cause of the failure. (e.g., result information)

According to an embodiment, in case that the message received from the EBC NF 182 in operation 205b includes the candidate energy budget(s) and/or at least one energy profile(s), in operation 205c, the PCF 140 may determine an energy policy, based on the received candidate energy budget(s) and/or the at least one energy profile(s). (energy budget policy decision)

According to an embodiment, the determined energy policy may have the form of at least one candidate energy budget or at least one energy profile for each entity.

According to an embodiment, in operation 206, the PCF 140 may transmit a response message to the NEF 183. The response message to be transmitted may include the energy policy information and/or the energy budget reference ID determined in operation 205c.

### (Npcf_EBPolicyControl_Creat_response)

According to an embodiment, in operation 207, the NEF 183 may include the information received from the PCF in operation 206 in the response message to be transmitted to the AF 170.

### (Nnef_EBNegotiation_Create response)

According to an embodiment, in case that the message received in operation 207 includes the energy policy and/or the energy budget reference ID, the AF 170 may include the following information in a message to be transmitted to the NEF 183 in operation 208:

### (Nef_EBNegotiation_Update)

- Energy budget reference ID: An energy budget reference ID received in operation 207 may be included.
- Selected energy policy:

According to an embodiment, in case that at least one candidate energy budget(s) is included in the energy policy information received in operation 207, the AF 170 may select one energy budget from at least one candidate energy budget(s) for each entity (e.g., at least one of the UE 100, the RAN 110, the UPF 130, the network (i.e., the RAN and the UPF), the entirety (i.e., the UE, the RAN, and the UPF)), and the AF 170 may include the selected entity-specific energy budget in a selected energy policy, together with the energy budget reference ID, in the message to be transmitted to the NEF 183.

According to an embodiment, in operation 209, when the NEF 183 receives an update request message from the AF 170 in operation 208, the NEF 183 may include the information included in the update request message in a message to be transmitted to the PCF 140.

### (Npcf_EBPolicyControl_Update request)

According to an embodiment, in operation 210a, the PCF 140 may transmit, to the EBC NF 182, one of the energy budget reference ID or the energy budget policy ID corresponding to UEs subject to energy control, information of application traffic subject to energy control, time information, area information, or the energy budget reference ID, together with the selected energy policy.

According to an embodiment, in operation 210b, the EBC NF 182 may store the information received from the PCF 140, and then transmit a response message to the PCF 140.

According to an embodiment, in operation 211, the PCF 140 may transmit an acknowledge (ACK) message to the NEF 183. (Npcf_EBPolicyControl_Update response)

According to an embodiment, in operation 212, the NEF 183 may transmit an acknowledge (ACK) message to the AF 170. (Nnef_EBNegotiation_Update response)

According to an embodiment, in operation 213, the PCF 140 may transmit an Nudr_DM_Update message to the UDR 181 in order to store the selected energy policy with respect to the selected energy budget reference ID. The Nudr_DM_Update message may include the following information:
- Energy Budget Reference ID: the Energy Budget Reference ID received in operation 209 may be included.
- Key information: Data key information indicating policy data and/or an energy budget may be included.
- Selected Energy Policy: The selected energy policy received in operation 209 may be included.
- One of the UEs subject to energy control corresponding to the energy budget reference ID, information of application traffic subject to energy control, time information, and area information may be included. (Nudr_DM_Update request)

According to an embodiment, in operation 214, the UDR 181 may store the information received in operation 211, and then transmit an acknowledge (ACK) message to the PCF 140.

### (Nudr_DM_Update response)

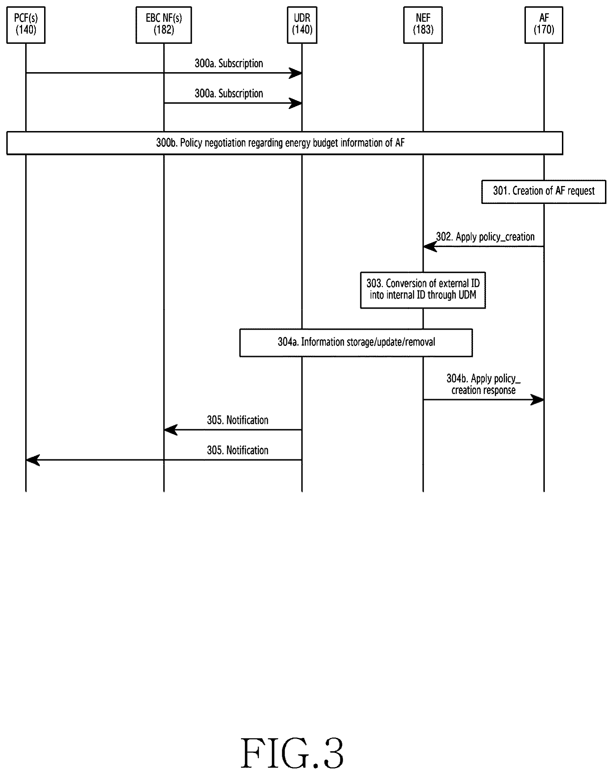

FIG. 3 illustrates a method in which an AF applies an energy policy negotiated with a 5G core network according to an embodiment.

Referring to FIG. 3, in operation 300a according to an embodiment, the PCF(s) 140 or the EBC NF(s) 182 may perform a subscription request for a change in the AF 170 request stored in the UDR 181. The subscription request message may include the following pieces of information:
- Information indicating an energy policy
- Subscription target information: For example, the subscription target information may include a group ID, a list of UE IDs, an AF ID, an application service provider (ASP) ID, an application ID, a server MAC address, and/or IP 3 tuples (e.g., a server IP address, a port number, and protocol information). (Nudr_DM_subscribe)

According to an embodiment, in operation 300b, the AF 170 performs policy negotiation regarding energy budget information. (The AF previously negotiated a policy for energy budget information)

According to an embodiment, in operation 301, the AF 170 generates an AF request for applying the negotiated energy policy. (Creation of the AF request)

According to an embodiment, in operation 302, the AF 170 may transmit a request message to apply the negotiated energy policy to a group of UE(s) or any UE. The request message may include at least some of the following pieces of information.

### (Nnef_ApplyPolicy_Create)

### - UEs subject to energy control:

The information on UEs subject to energy control may be information indicating UEs that are targets to which an energy budget is to be applied. For example, the information on UEs subject to energy control may include at least one of a group ID, a list of UE ID(s), or an AF ID.

### - Information of application traffic subject to energy control:

The information of application traffic subject to energy control may be information indicating traffic that is a target to which an energy budget is to be applied. For example, information of an application subject to energy control may include an application service provider (ASP) identifier (ID), an application (app) ID, a server MAC address, and/or IP 3 tuples (e.g., a server IP address, a port number, and protocol information).
- Time information: The time information may include time information for which the energy budget is applicable.

In this case, the message may include an indicator indicating whether to periodically apply, in addition to the time information.

Alternatively, the time information may include time period information (e.g., from 10/March/2023 to 28/March/2023).
- Area information: The area information may include information on a region to which the energy budget is applicable. For example, the area information may include a TAI(s), a cell ID(s), and/or geographical location information.
- Energy budget reference ID: The energy budget reference ID received by the AF 170 from the PCF 170 (or the energy budget control NF) through negotiation via the NEF 183 in operation 300 may be included.

According to an embodiment, in case that the NEF 183 receives a request message from the AF 170, the NEF 183 may assign a transaction reference ID for the request message. In addition, the NEF 170 may perform authentication for the request message, and may store the AF identifier and the transaction reference ID.

According to an embodiment, in operation 303, in case that the NEF 183 receives an external identifier(s), the NEF 183 transmits a request message including identifier translation to the UDM 145 to obtain an internal identifier(s) (e.g., a SUPI(s)) from the UDM 145. (Resolve the external ID to the internal ID via UDM)

According to an embodiment, in case that the NEF 183 receives an external group identifier(s), the NEF 183 may transmit a request message including group identifier translation to the UDM 145, and may obtain a corresponding internal group identifier(s) from the UDM 145.

According to an embodiment, in operation 304a, the NEF 183 may store the request information received from the AF 170 in the UDR 181. For example, the stored information may be an energy budget reference ID and a target (e.g., the internal group identifier or the SUPI(s)) to which the energy budget reference ID is to be applied. For example, the information stored may be stored in the UDR in the following form: Data Set = Application Data; Data Subset = Energy Budget reference ID; Data Key = Internal Group Identifier or SUPI (Storing/updating/removing the information).

According to an embodiment, in operation 304b, the NEF 183 transmits a response message to the AF 170. The transmitted response message may include a transaction reference ID. (Nnef_ApplyPolicy_Create response)

According to an embodiment, in case that the PCF(s) 140 has requested to subscribe with respect to a change in the AF 170 request stored in the UDR 181 in operation 300a, in operation 305, the UDR 181 may transmit a message notifying of changed information to the corresponding PCF(s) 140. (Nudr_DM_Notify)

According to an embodiment, in case that the EBC NF(s) 182 has requested to subscribe with respect to a change in the AF 170 request stored in the UDR 181 in operation 300a, the UDR 181 may transmit a message notifying of changed information to the corresponding EBC NF(s) 182.

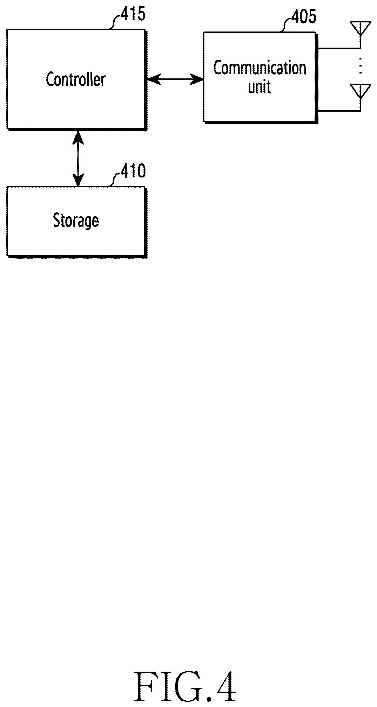

FIG. 4 illustrates a functional structure of a base station according to an embodiment of the disclosure.

Referring to FIG. 4, the structure according to an embodiment illustrated in FIG. 4 may be understood as a structure of the RAN 110 (e.g., gNB or eNB) in FIG. 1. As used herein, such terms as "... unit" and "... er" refer to a unit configured to process at least one function or operation, and may be implemented as hardware, software, or a combination of hardware and software.

According to an embodiment, the base station may include a communication unit 405, a storage 410, and/or a controller 415.

The communication unit 405 performs functions for transmitting/receiving signals through a radio channel. For example, the communication unit 405 performs functions of conversion between baseband signals and bitstrings according to the physical layer specifications of the system. For example, during data transmission, the communication unit 405 encodes and modulates a transmitted bitstring to generate complex symbols. In addition, during data reception, the communication unit 405 demodulates and decodes a baseband signal to restore a received bitstring. In addition, the communication unit 405 up-converts a baseband signal to an RF band signal, transmits the same through an antenna, and down-converts an RF band signal received through the antenna to a baseband signal. For example, the communication unit 405 may include a transmission filter, a reception filter, an amplifier, a mixer, an oscillator, a DAC, and an ADC.

In addition, the communication unit 405 may include multiple transmission/reception paths. Moreover, the communication unit 405 may include at least one antenna array including multiple antenna elements. In terms of hardware, the communication unit 405 may include a digital circuit and an analog circuit (e.g., radio frequency integrated circuit (RFIC)). The digital circuit and the analog circuit may be implemented as a single package. In addition, the communication unit 405 may include multiple RF chains. Furthermore, the communication unit 405 may perform beamforming.

The communication unit 405 transmits and receives signals as described above. Accordingly, all or part of the communication unit 405 may be referred to as a "transmitter", a "receiver", or a "transceiver". In addition, as used in the following description, the meaning of "transmission and reception performed through a radio channel" includes the meaning that the above-described processing is performed by the communication unit 405.

The storage 410 stores data such as basic programs, application programs, and configuration information for operations of the base station. The storage 410 may include a volatile memory, a nonvolatile memory, or a combination of a volatile memory and a nonvolatile memory. In addition, the storage 410 provides the stored data at the request of the controller 415.

The controller 415 controls the overall operation of the base station. For example, the controller 415 transmits and receives signals through the communication unit 405. In addition, the controller 415 records data in the storage 410 and reads the data from the storage 410. In addition, the controller 415 may perform functions of protocol stacks required by communication specifications. To this end, the controller 415 may include at least one processor or microprocessor, or may be a part of a processor. In addition, a part of the communication unit 405 and the controller 415 may be referred to as a communication processor (CP). According to various embodiments, the controller 415 may control to perform synchronization by using a wireless communication network. For example, the controller 415 may control the base station to perform operations according to various embodiments described above.

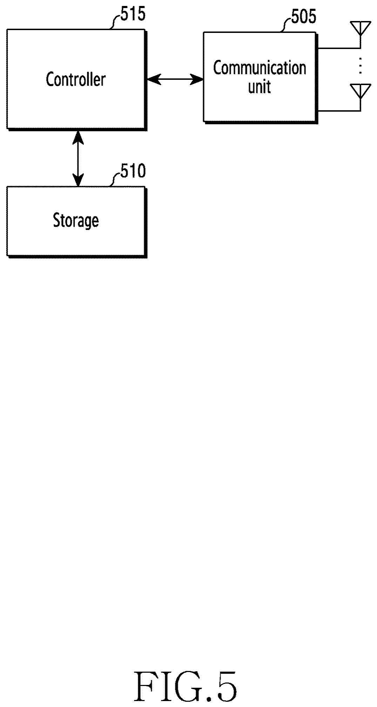

FIG. 5 illustrates an example of a functional structure of a UE according to an embodiment of the disclosure. The structure illustrated in FIG. 5 may be understood as a structure of the UE 100 in FIG 1. As used herein, such terms as "... unit" and "... er" refer to a unit configured to process at least one function or operation, and may be implemented as hardware, software, or a combination of hardware and software.

Referring to FIG. 5, the UE includes a communication unit 505, a storage 510, and/or a controller 515.

The communication unit 505 performs functions for transmitting/receiving signals through a radio channel. For example, the communication unit 505 performs functions of conversion between baseband signals and bitstrings according to the physical layer specifications of the system. For example, during data transmission, the communication unit 505 encodes and modulates a transmitted bitstring to generate complex symbols. In addition, during data reception, the communication unit 505 demodulates and decodes a baseband signal to restore a received bitstring. In addition, the communication unit 505 up-converts a baseband signal to an RF band signal, transmits the same through an antenna, and down-converts an RF band signal received through the antenna to a baseband signal. For example, the communication unit 505 may include a transmission filter, a reception filter, an amplifier, a mixer, an oscillator, a DAC, and an ADC.

In addition, the communication unit 505 may include multiple transmission/reception paths. Moreover, the communication unit 505 may include at least one antenna array including multiple antenna elements. In terms of hardware, the communication unit 505 may include a digital circuit and an analog circuit (e.g., radio frequency integrated circuit (RFIC)). The digital circuit and the analog circuit may be implemented as a single package. In addition, the communication unit 505 may include multiple RF chains. Furthermore, the communication unit 505 may perform beamforming.

The communication unit 505 transmits and receives signals as described above. Accordingly, all or part of the communication unit 505 may be referred to as a "transmitter", a "receiver", or a "transceiver". In addition, as used in the following description, the meaning of "transmission and reception performed through a radio channel" includes the meaning that the above-described processing is performed by the communication unit 505.

The storage 510 stores basic programs, application programs, and data, such as configuration information, for operation of the main base station. The storage 510 may include a volatile memory, a nonvolatile memory, or a combination of a volatile memory and a nonvolatile memory. In addition, the storage 510 provides the stored data at the request of the controller 515.

The controller 515 controls the overall operation of the UE. For example, the controller 515 transmits and receives signals through the communication unit 505. In addition, the controller 515 records data in the storage 510 and reads the data from the storage 510. In addition, the controller 515 may perform functions of protocol stacks required by communication specifications. To this end, the controller 515 may include at least one processor or microprocessor, or may be a part of a processor. In addition, a part of the communication unit 505 and the controller 515 may be referred to as a communication processor (CP). According to various embodiments, the controller 515 may control to perform synchronization by using a wireless communication network. For example, the controller 515 may control the UE to perform operations according to various embodiments described above.

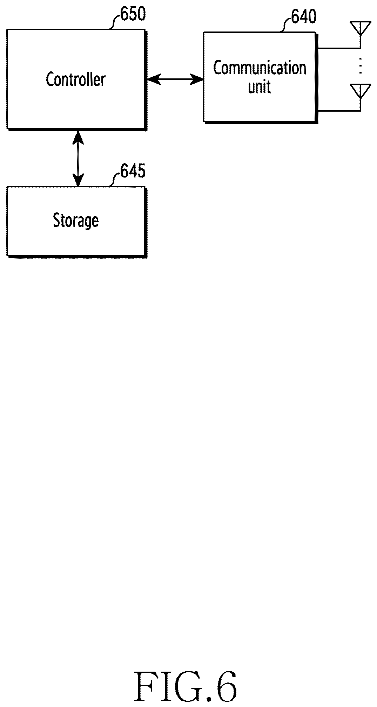

FIG. 6 illustrates an example of a functional structure of a core network entity according to an embodiment of the disclosure. A structure of a core network entity in a wireless communication system according to various embodiments of the disclosure is illustrated. The structure illustrated in FIG. 6 may be understood as a structure of a device having at least one function among the network entities (e.g., NWDAF 165, AMF 120, and SMF 135) in FIG. 1. As used herein, such terms as "... unit" and "... er" refer to a unit configured to process at least one function or operation, and may be implemented as hardware, software, or a combination of hardware and software.

Referring to FIG. 6, the core network entity may include a communication unit 640, a storage 645, and/or a controller 650.

The communication unit 640 provides an interface for communicating with other devices in the network. That is, the communication unit 640 converts a bitstring, transmitted from the core network entity to any other device, into a physical signal, and converts a physical signal, received from any other device, into a bitstring. The communication unit 640 may transmit/receive signals. Accordingly, the communication unit 640 may be referred to as a modem, a transmitter, a receiver, or a transceiver. The communication unit 640 enables the core network entity to communicate with other devices or the system via a backhaul connection (e.g., wired backhaul or wireless backhaul) or via a network.

The storage 645 stores basic programs, application programs, and data, such as configuration information, for operation of the main base station. The storage 645 may include a volatile memory, a nonvolatile memory, or a combination of a volatile memory and a nonvolatile memory. In addition, the storage 645 provides the stored data at the request of the controller 650.

The controller 650 controls the overall operation of the core network entity. For example, the controller 650 transmits/receives signals through the communication unit 640. In addition, the controller 650 records data in the storage 645 and reads the data from the storage 645. To this end, the controller 650 may include at least one processor. According to various embodiments, the controller 650 may control to perform synchronization by using a wireless communication network. For example, the controller 650 may control the core network entity to perform operations according to various embodiments described above.

According to an embodiment, a method performed by an NWDAF in a mobile communication system may include, in response to identifying an analysis request for a network slice, obtaining information related to the network slice, obtaining information associated with at least one network entity included in the network slice, based on the information related to the network slice, and generating an analysis result for the network slice, based on the obtained information associated with the at least one network.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

Advantageous effects obtainable from the disclosure may not be limited to the above-mentioned effects, and other effects which are not mentioned herein may be clearly understood from the following description by those skilled in the art to which the disclosure pertains.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. Moreover, other variants based on the technical idea of the embodiments may also be implemented in various systems such as FDD LTE, TDD LTE, and 5G or NR systems.

## Claims

1. A method performed by a network exposure function (NEF) entity in a mobile communication system, the method comprising:
receiving, from an application function (AF) entity, a message requesting negotiation for at least one policy associated with energy, wherein the message comprises information on maximum allowed energy consumption of at least one of a radio access network (RAN) or a user plane function (UPF) entity;
transmitting, to a policy control function (PCF) entity, a first message comprising the information on the maximum allowed energy consumption; and
receiving, from the PCF entity, a second message comprising information on the at least one policy associated with the energy, as a response to the first message,
wherein the at least one policy associated with the energy is based on the information on the maximum allowed energy consumption.

2. The method of claim 1, further comprising:
transmitting, to the AF entity, the information on the at least one policy associated with the energy, as a response to the message.

3. The method of claim 1, wherein the message comprises at least one of information on a number of user equipments (UEs) associated with the at least one policy, information on an address of an application server, information on a time associated with the at least one policy, or information on an area associated with the at least one policy.

4. The method of claim 1, comprising:
in case that the information on the at least one policy comprises a plurality of policies, receiving, from the AF entity, a message comprising information on a policy for the AF entity among the plurality of policies; and
transmitting, to the PCF entity, a message comprising the information on the policy for the AF entity.

5. A network exposure function (NEF) entity in a mobile communication system, the NEF entity comprising:
a transceiver; and
a controller coupled to the transceiver,
wherein the controller is configured to:
receive, from an application function (AF) entity, a message requesting negotiation for at least one policy associated with energy, wherein the message comprises information on maximum allowed energy consumption of at least one of a radio access network (RAN) or a user plane function (UPF) entity;
transmit, to a policy control function (PCF) entity, a first message comprising the information on the maximum allowed energy consumption; and
receive, from the PCF entity, a second message comprising information on the at least one policy associated with the energy, as a response to the first message, and
wherein the at least one policy associated with the energy is based on the information on the maximum allowed energy consumption.

6. The NEF entity of claim 5, wherein the controller is configured to:
transmit, to the AF entity, the information on the at least one policy associated with the energy, as a response to the message.

7. The NEF entity of claim 5, wherein the message comprises at least one of information on a number of user equipments (UEs) associated with the at least one policy, information on an address of an application server, information on a time associated with the at least one policy, or information on an area associated with the at least one policy.

8. The NEF entity of claim 5, wherein the controller is configured to:
in case that the information on the at least one policy comprises a plurality of policies, receive, from the AF entity, a message comprising information on a policy for the AF entity among the plurality of policies; and
transmit, to the PCF entity, a message comprising the information on the policy for the AF entity.

9. A method performed by a policy control function (PCF) entity in a mobile communication system, the method comprising:
receiving, from a network exposure function (NEF) entity, a first message comprising information on maximum allowed energy consumption of at least one of a radio access network (RAN) or a user plane function (UPF) entity; and
transmitting, to the NEF entity, a second message comprising information on at least one policy associated with energy, as a response to the first message,
wherein the at least one policy associated with the energy is based on the information on the maximum allowed energy consumption.

10. The method of claim 9, wherein the first message comprises at least one of information on a number of user equipments (UEs) associated with the at least one policy, information on an address of an application server, information on a time associated with the at least one policy, or information on an area associated with the at least one policy.

11. The method of claim 9, comprising:
in case that the information on the at least one policy comprises a plurality of policies, receiving, from the NEF entity, a message comprising information on a policy for the AF entity among the plurality of policies.

12. The method of claim 11, comprising:
transmitting, to a unified data repository (UDR) entity, a message requesting storage of the information on the policy; and
receiving, from the UDR entity, a response message to the message requesting the storage of the information on the policy.

13. A policy control function (PCF) entity in a mobile communication system, the PCF entity comprising:
a transceiver; and
a controller coupled to the transceiver,
wherein the controller is configured to:
receive, from a network exposure function (NEF) entity, a first message comprising information on maximum allowed energy consumption of at least one of a radio access network (RAN) or a user plane function (UPF) entity; and
transmit, to the NEF entity, a second message comprising information on at least one policy associated with energy, as a response to the first message,
wherein the at least one policy associated with the energy is based on the information on the maximum allowed energy consumption.

14. The PCF entity of claim 13, wherein the first message comprises at least one of information on a number of user equipments (UEs) associated with the at least one policy, information on an address of an application server, information on a time associated with the at least one policy, or information on an area associated with the at least one policy.

15. The PCF entity of claim 13, wherein the controller is configured to:
in case that the information on the at least one policy comprises a plurality of policies, receive, from the NEF entity, a message comprising information on a policy for the AF entity among the plurality of policies;
transmit, to a unified data repository (UDR) entity, a message requesting storage of the information on the policy; and
receive, from the UDR entity, a response message to the message requesting the storage of the information on the policy.
